# EUROPEAN PATENT SPECIFICATION

(11) **EP 2 928 662 B1**
(45) Date of publication and mention of the grant of the patent: **16.10.2019**
(21) Application number: 13861098.5
(22) Date of filing: 03.12.2013
(51) Int. Cl.: B29C 45/04, B29C 45/26, B29C 45/44, B65D 5/74

(54) **A PACKAGE CLOSURE AND A DEVICE AND A METHOD FOR PRODUCING A PACKAGE CLOSURE AND USE OF SUCH A DEVICE**
PAKETVERSCHLUSS SOWIE VORRICHTUNG UND VERFAHREN ZUR HERSTELLUNG EINES PAKETVERSCHLUSSES UND VERWENDUNG SOLCH EINER VORRICHTUNG
FERMETURE D'UN PAQUET ET DISPOSITIF ET PROCÉDÉ POUR RÉALISER UNE FERMETURE D'UN PAQUET ET UTILISATION D'UN TEL DISPOSITIF

(30) Priority: 05.12.2012 SE 1251378
(43) Date of publication of application: 14.10.2015
(73) Proprietor: Petro-Pack AB, 341 34 Ljungby (SE)
(72) Inventor: NILSSON, Hugo, S-341 33 Ljungby (SE)
(74) Representative: Ström & Gulliksson AB
(86) International application number: PCT/SE2013/051439
(87) International publication number: WO 2014/088500

(56) References cited:
- EP-A1- 0 273 858
- WO-A1-01/74683
- WO-A1-94/14588
- WO-A1-99/50050
- WO-A1-99/50050
- SE-C2- 535 280
- SE-C2- 535 280
- US-A- 3 957 944
- US-A- 4 155 698
- US-A- 4 806 301
- US-A- 5 512 228
- US-A- 5 711 441
- US-A- 5 711 441
- US-A1- 2006 124 575
- US-A1- 2006 124 575
- US-B2- 8 152 015
- US-B2- 8 152 015

## Description

### FIELD OF THE INVENTION

The invention relates to a package closure and a method for producing a package closure. The present invention further relates to a device for producing a package closure.

This type of package closures comprises a neck having an opening and a cap. One such type of caps is a screw cap. Package closures of this type are arranged in plastic materials having an inherent flexibility, such as thermoplastic materials or other plastic materials having similar properties. Package closures of this type are generally used in connection with packages for liquid foodstuff, such as milk, juice, water, yoghurt and similar but can be used for any type of package.

### PRIOR ART

There are a plurality of different types of package closures in the prior art. One such type of device is for example disclosed in WO2009136836. The package closure disclosed in WO2009136836 comprises a neck provided with external threads and a screw cap being connectable with the neck through the threads of the neck.

One problem with such prior art package closures is that they are complex and expensive to produce and consequently require expensive and advanced equipment for production thereof. The production requires at least two moulding tools, i.e. one for the cap and one for the neck, wherein the cap, in addition, must be mounted on the neck. Hence, a plurality of production steps is required to produce such prior art package closures.

US2006/124575 discloses a package closure having a threaded neck and a threaded cap integrally moulded in a unitary structure.

SE535280 discloses a method of producing a package closure having a tear notch between a cap and a neck of the package closure.

### SUMMARY OF THE INVENTION

An object of the invention is to avoid the above mentioned drawbacks and problems of the prior art. The invention results in a simplified and more cost efficient production method, in which the entire package closure can be produced in a single tool without subsequent mounting of different parts of the package closure, while the package closure according to the invention simultaneously can be arranged tamper-proof and resealable.

The present invention relates to a method for producing a package closure having a neck and a cap, comprising the steps of
a) by means of movable jaws and an outer tool core forming the neck and the cap in one single integrated piece, wherein the neck is connected to the cap through a notch, and forming a thread on the cap and a thread on the neck,
b) by means of an inner tool core forming a flexible projection on an inner side of the cap for interaction with the inner tool core,
c) removing the jaws from the formed package closure,
d) displacing the outer tool core in relation to the package closure and the inner tool core to at least partially disengage the package closure from the outer tool core,
e) by means of the inner tool core retaining the cap by the projection formed on the interior side of the cap and simultaneously, by means of an ejector, displacing the neck in relation to the cap and thereby breaking the notch and bringing the thread of the cap into engagement with the thread of the neck through an inherent flexibility of the threads to form a package closure having a cap mounted on the neck, and
f) by means of the ejector displacing the package closure in relation to the inner tool core, so that the projection by its flexibility is disengaged from the inner tool core.

By forming the neck and the cap as a single integrated unit of, for example, plastic materials, after which the neck and cap are displaced in the axial direction in relation to each other, the production of the package closure can be provided in a quick and efficient manner in a single tool without the need for subsequent mounting of the cap on the neck.

The cap is a screw cap with threads for interaction with threads on the neck. Surprisingly it has been found that a threaded neck and a threaded cap in a method according to one embodiment of the invention can be displaced axially in relation to each other, so that the threads of the cap are pushed over the threads of the neck and the threads engage each other due to an inherent flexibility of the threads. The threads of the cap can be interior threads. Alternatively, the cap is arranged with exterior threads.

For example, the package closure is produced in a heated process, such as a moulding process, compression moulding process or similar, wherein the plastic material is heated and thereby softened. For example, the jaws are heated. While the plastic material still is heated to a predetermined temperature, which is dependent on the plastic material used, the plastic material is soft enough for the threads to be pushed into each other by axial displacement without screwing and without permanent deformation of the plastic material.

The cap can be formed with a radially extending top portion and an axially extending and tubular portion having an interior thread. Hence, the tubular portion has larger diameter than at least a top portion of the neck. Hence, the outer tool core is arranged with larger diameter at an end portion for producing the cap than at a portion for producing the neck. The end portion of the outer tool core is consequently forced to pass at least the top portion of the neck, which is possible by the inherent flexibility of the plastic material, for example when the plastic material is heated. For example, one or more of steps d-f are performed within a few seconds after step c, such as 2-3 seconds, so that the plastic material has not cooled too much.

The method can comprise the step of forming a tamper-evident ring (also called tamper ring, tamper-proof ring, etc.). The tamper-evident ring can be formed between the cap, such as an end of the tubular portion of the cap, and the notch. The tamper-evident ring can be formed at the same time as the cap and the neck.

The invention also relates to a package closure comprising a neck provided with an opening, and a cap for closing the opening, wherein the cap comprises a top portion extending across the opening and in the radial direction in relation to a centre axis of the package closure, and a tubular portion extending axially and being provided with a thread, characterised in that an interior side of the top portion of the cap is provided with a flexible and axially projecting projection having a radially projecting flange for retaining the cap to an inner tool core of a device for producing the package closure during axial relative displacement between the cap and the neck to push the thread of the cap over a thread of the neck during production of the package closure. Surprisingly it has been found that a package closure with a screw cap can be produced in a quick and efficient manner by means of the projection. The projection results in that the cap can be retained in the inner tool core and enables axial relative displacement between the cap and the neck when the threads of the cap are pushed over the threads of the neck.

The thread of the cap can be an interior thread, and the neck can be arranged with an exterior thread for interaction with the thread of the cap. Hence, the cap is arranged with a larger diameter than at least a top portion of the neck, where the cap is mounted.

The tubular portion of the cap can be provided with a tamper-evident ring, for example at an end of the tubular portion.

The top portion of the cap can be arranged with radially extending stiffening ribs for reinforcement in the radial direction. Hence, deformation of the cap during opening thereof is prevented or reduced, wherein easier opening of the cap is provided.

Hence, by the invention a package closure having a screw cap and a tamper-evident ring can be obtained in a joint tool and in a single production step in which both the neck and the screw cap with the tamper-evident ring can be formed simultaneously and the screw cap can be mounted during ejection of the package closure.

The invention also relates to a device for producing a package closure having centre axis, a neck and a cap, comprising a movable first jaw, a movable second jaw and a tool core interacting with the jaws to form a mould for the package closure, and an ejector for ejecting the produced package closure, wherein the tool core comprises an outer tool core and an inner tool core being movable in relation to the outer tool core, wherein the tool core and the jaws are arranged for forming the neck and the cap in one single integrated piece and for forming the cap with a radially extending top portion, characterised in that the outer tool core and the jaws are arranged for forming a thread of the cap and a thread of the neck, that the outer tool core is arranged for forming, together with the jaws, a notch between the neck and the cap, and that the inner tool core comprises a recess for forming and interaction with a projection on the interior side of the top portion of the cap for retaining the cap to the inner tool core during axial relative displacement between the ejector and the inner tool core to push the thread of the cap over the thread of the neck.

The outer tool core can be arranged with an end portion for forming the cap, and a portion for forming the neck or at least a portion thereof, wherein the end portion is arranged with larger diameter than the portion for forming the neck. Surprisingly, it has been found that the wider end portion of the outer tool core can be forced to pass the thinner neck due to that the plastic material in the neck is flexible. Hence, a wider cap and a thinner neck can be produced simultaneously and by means of the same tool core. By the device a package closure with a screw cap can be produced in an efficient manner.

Further characteristics and advantages of the present invention will become apparent from the description of the embodiments below, the appended drawings and the dependent claims.

### SHORT DESCRIPTION OF THE DRAWINGS

The invention will now be described more in detail with the aid of embodiment examples and with reference to the appended drawings, in which
Fig. 1 is a schematic section view illustrating a part of a device for producing a package closure, and a package closure during production according to one embodiment of the present invention, in which the device is in a position for moulding the package closure,
Fig. 2 is a schematic section of the package closure during production as illustrated in Fig. 1, in which jaws and a counterpart of the device have been removed,
Fig. 3 and Fig. 4 are schematic section views of the package closure during production and a part of the device of Fig. 2, showing displacement of an outer tool core,
Fig. 5 is schematic section view of the package closure and a part of the device, in which a neck and a cap of the package closure are displaced in relation to each other during finishing of the package closure,
Fig. 6 is a schematic section view of the package closure and a part of the device, in which the cap has been displaced in relation to an inner tool core of the device during disengagement of the package closure from it,
Fig. 7 is a schematic section view of a part of the package closure according to one embodiment, in which the package closure is in closed position and a tamper-evident ring of the package closure is intact,
Fig. 8 is a schematic section view according to Fig. 7, wherein the package closure has been moved from its closed position by screwing and the tamper-evident ring is broken,
Fig. 9 is a schematic section view according to Fig. 8, wherein the cap has been removed from the neck by screwing,
Figs. 10-14 illustrate a package closure and different details thereof according to one embodiment when the package closure is under production and the neck has not been displaced into the cap,
Figs. 15-18 illustrate a package closure and different details thereof according to one alternative embodiment when the package closure is under production and the neck has not been displaced into the cap,
Figs. 19-24 illustrate a package closure and different details thereof according to another alternative embodiment when the package closure is under production and the neck has not been displaced into the cap.

### THE INVENTION

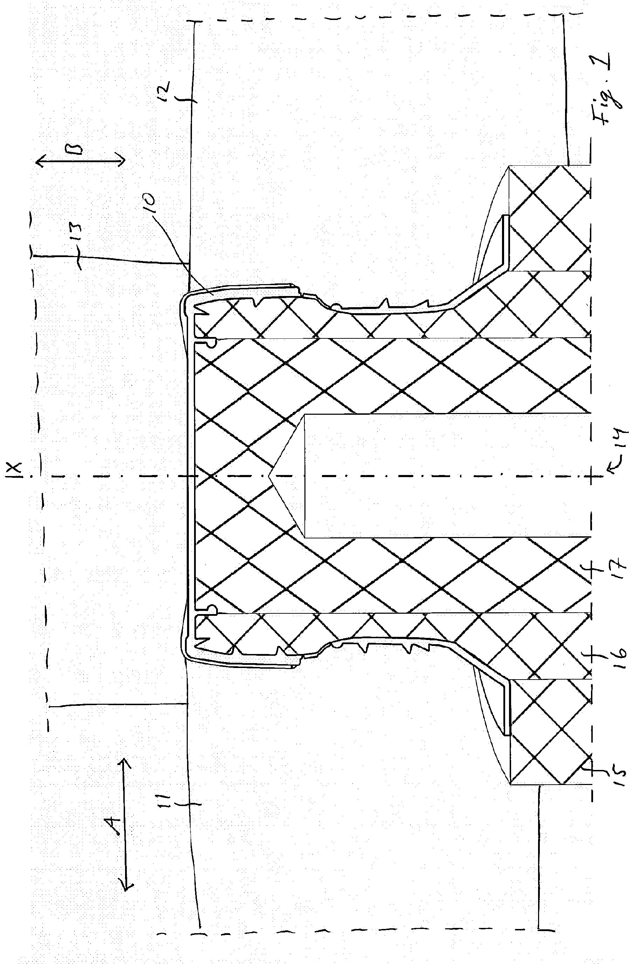

Referring to Fig. 1 a package closure 10 during production and a part of a device for producing said package closure 10 is illustrated schematically. The package closure 10 is arranged in a flexible material, such as a suitable plastic material. For example, the package closure 10 is formed in a suitable thermoplastic, such as polyethylene. The device comprises a movable first jaw 11, a movable second jaw 12, a counterpart 13 and a tool core 14 interacting with the jaws 11, 12 and the counterpart 13 to form a mould for receiving an amount of plastic material for producing the package closure 10. The device further comprises a movable ejector 15 for ejecting the produced package closure 10, which is described in more detail below. The device is arranged as a moulding tool for moulding plastic materials. For example, the device is arranged for moulding plastic materials, wherein the jaws 11, 12 and/or the tool core 14 can be heated and/or cooled in a conventional manner. The jaws 11, 12 and the tool core 14 are arranged with a particular form for providing the mould for producing the package closure 10 according to the invention, which form is evident by the description of the special features of the package closure 10 below.

The package closure 10 according to the invention is moulded in a single piece, wherein the cap 19 and the neck 18 are an integrated unit. The jaws 11, 12 and the tool core 14 form a continuous mould for forming the neck 18 and the cap 19 in a single piece.

The tool core 14 comprises an outer tool core 16 and an inner tool core 17. The outer tool core 16 and the inner tool core 17 are displaceable in relation to each other. Hence, the outer tool core 16 and/or the inner tool core 17 is/are movable and displaceable in the axial direction.

In Fig. 1 the device is illustrated in a position in which the jaws 11, 12 interact with the counterpart 13 and the tool core 14 to form the mould for moulding the package closure 10 and in which a package closure 10 is in the mould, i.e. in contact with the jaws 11, 12, the counterpart 13 and the tool core 14.

The jaws 11, 12 are movable in a direction substantially perpendicular to a centre axis X of the package closure 10, such as in the radial direction, which direction is illustrated by means of the arrow A in Fig. 1, between a position for forming the package closure and a position in which the package closure 10 is disengaged from the jaws 11, 12. Further, the counterpart 13 is movable in a direction along the centre axis X of the package closure, as illustrated by means of the arrow B in Fig. 1, between a position for forming the package closure and a position in which the package closure 10 is disengaged from the counterpart 13.

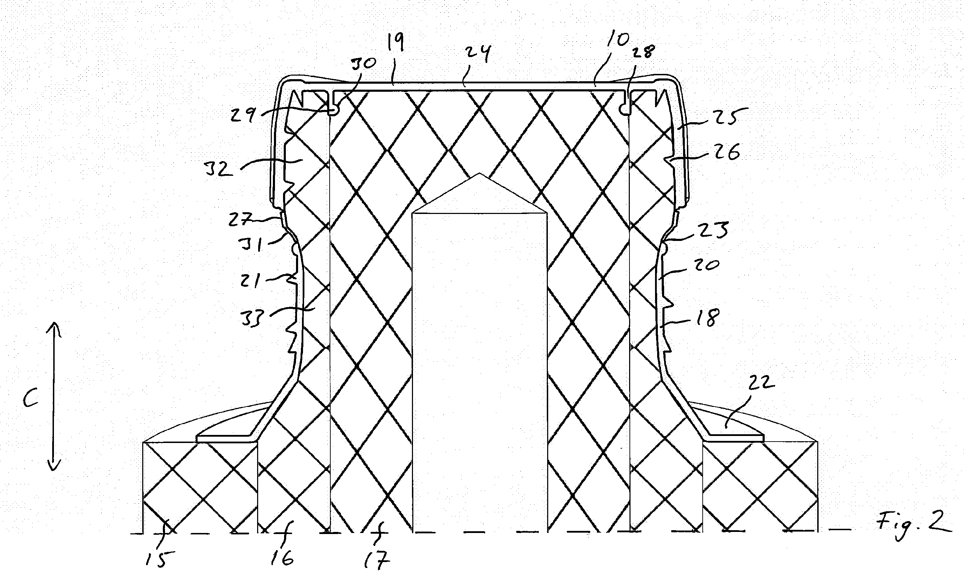

With reference to Fig. 2 the jaws 11, 12 and the counterpart have been removed, wherein the package closure 10 is illustrated during production thereof together with the outer tool core, the inner tool core 17 and the ejector 15. The ejector 15 and the outer tool core 16 are displaceable in relation to each other in the axial direction, as illustrated by means of the arrow C in Fig. 2. Further, the ejector 15 and the inner tool core 17 are displaceable in relation to each other in the axial direction. When the jaws 11, 12 and the counterpart 13 are disengaged from the package closure 10 the package closure 10 can, for example, be brought forwards in the axial direction by means of the ejector 15 in a direction along the centre axis x of the package closure, as described in more detail below.

In the illustrated embodiment the package closure 10 is substantially cylindrical having a circular cross section. The package closure 10 comprises a neck 18 with an opening, and a cap 19 for closing the opening. The neck 18 comprises an axially extending tubular first portion 20 and a radially extending thread 21, such as an external thread. In the illustrated embodiment the first portion 20 is arranged with a second portion 22 arranged in an angle to the first portion 20 to facilitate connection to a package. For example, the second portion 22 is arranged for connection to a package by melting, welding, gluing or in any other suitable manner. For example, the second portion 22 projects substantially radially in relation to the first portion 20.

During production the cap 19 is connected to the neck 18, wherein the neck 18 and the cap 19 are formed in a single piece as one integrated unit of continuous plastic. At that time the cap 19 is connected to the neck 18 through a notch 23. In the illustrated embodiment, the notch 23 extends continuously between the cap 19 and the neck 18. Alternatively, the neck 18 and the cap are formed in a single piece having openings between the neck 18 and the cap 19, wherein a plurality of notches 23 are distributed around the package closure 10 between the cap 19 and the neck 18.

In the illustrated embodiment the cap 19 comprises a radially extending top portion 24 and an axially extending and cylindrical or tubular portion 25 connected thereto. The tubular portion 25 is arranged with a thread 26, such as an internal thread, for interaction with the thread 21 of the neck 18.

In the illustrated embodiment, the package closure 10 comprises a tamper-evident ring 27. During forming of the package closure 10 the tamper-evident ring 27 is arranged between the cap 19, such as the tubular portion 25 of the cap 19, and the notch 23.

The cap 19 is provided with a projection 28 projecting from an interior side of the cap 19, such as the top portion 24. For example, the projection 28 extends substantially axially. The projection 28 is arranged between the centre axis X and the tubular portion 25. The projection 25 is flexible and arranged for interaction with the inner tool core 17, so that the cap 19 is connected to the inner tool core 17 through the projection 28 during the production of the package closure 10. In the illustrated embodiment the projection 28 is arranged with a radially extending flange 29. To temporarily fasten the cap 19 the inner tool core 17 is, in the illustrated embodiment, provided with a recess 30 for receiving the projection 28 or the flange 29 of the projection 28. For example, the recess 30 extends radially inwards for receiving the projection 28.

In the illustrated embodiment one end of the tubular portion 25 of the cap 19 or one end of the temper-evident ring 27 is connected to the neck 18 through a folding portion 31. The folding portion 31 is connected to the neck 18 through the notch 23. Alternatively, the folding portion 31 is connected to the cap 19 through the notch 23. The folding portion 31 is, for example, arranged continuously in the circumference of the package closure. Alternatively, a plurality of folding portions 31 are distributed around the circumference of the package closure with openings between them to provide for easier folding and material savings.

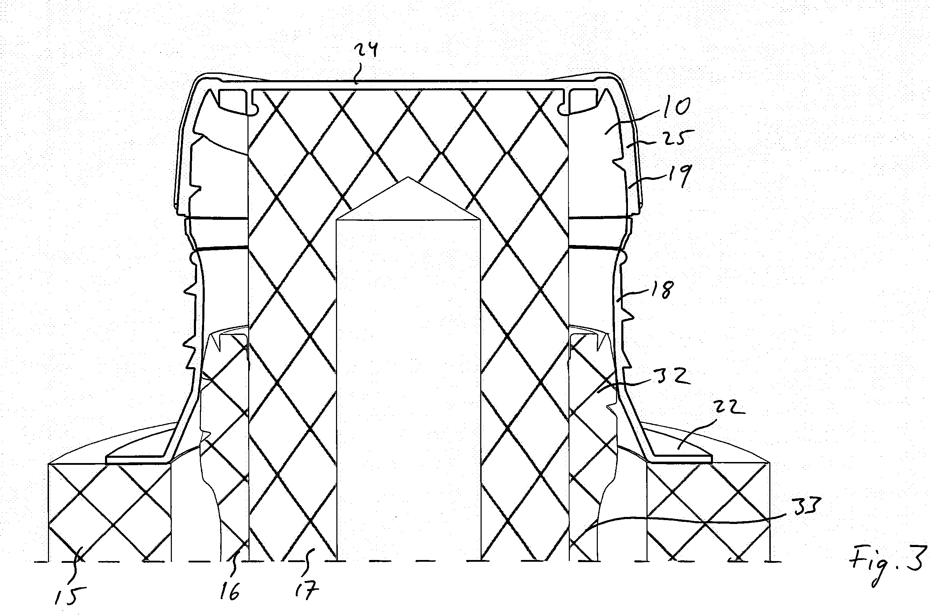

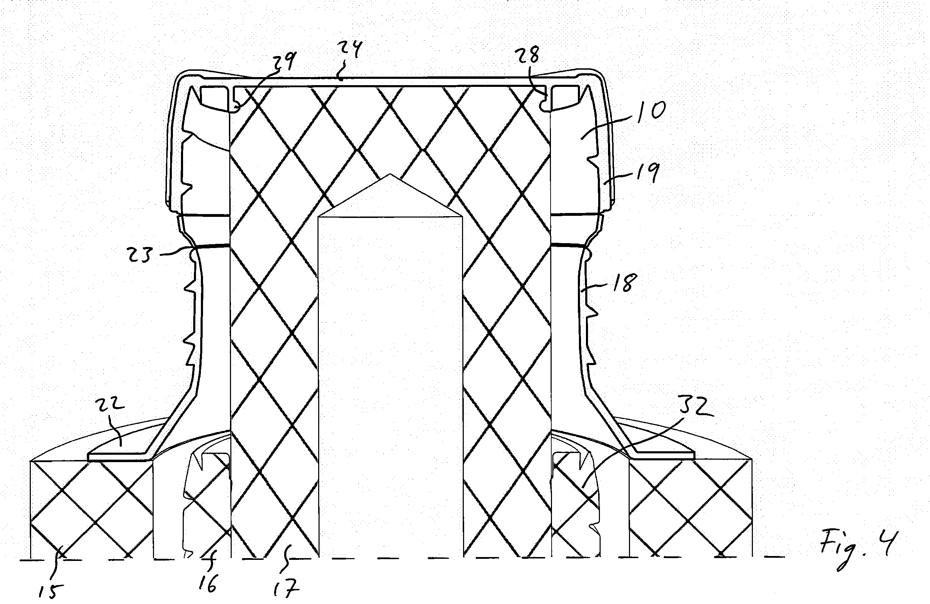

With reference also to Figs. 3 and 4 displacement of the outer tool core 16 in relation to the package closure 10 and the inner tool core 17 is illustrated schematically during a part of the production of the package closure 10 according to one embodiment of the invention. After forming the package closure 10 in a single piece and the cap is displaced axially in relation to the neck 18 and not mounted on the neck 18 the outer tool core 16 is displaced in the axial direction, wherein the cap 19 and the neck 18 are disengaged from the outer tool core 16.

The outer tool core 16 is arranged with an end portion 32 for forming the cap 19 and a portion 33 for forming the neck 18 or at least a part thereof. The end portion 33 is arranged with larger diameter than the portion for forming the neck 18. Hence, the neck 18, or a portion thereof, is arranged with smaller diameter than the cap 19, so that the cap 19 can be brought onto and to enclose at least a part of the neck 18. During displacement of the outer tool core 16 it is forced to pass the neck 18, which is made possible by an inherent flexibility of the plastic material the package closure 10 is made of. In Fig. 4 the neck 18 is illustrated disengaged from the outer tool core 16.

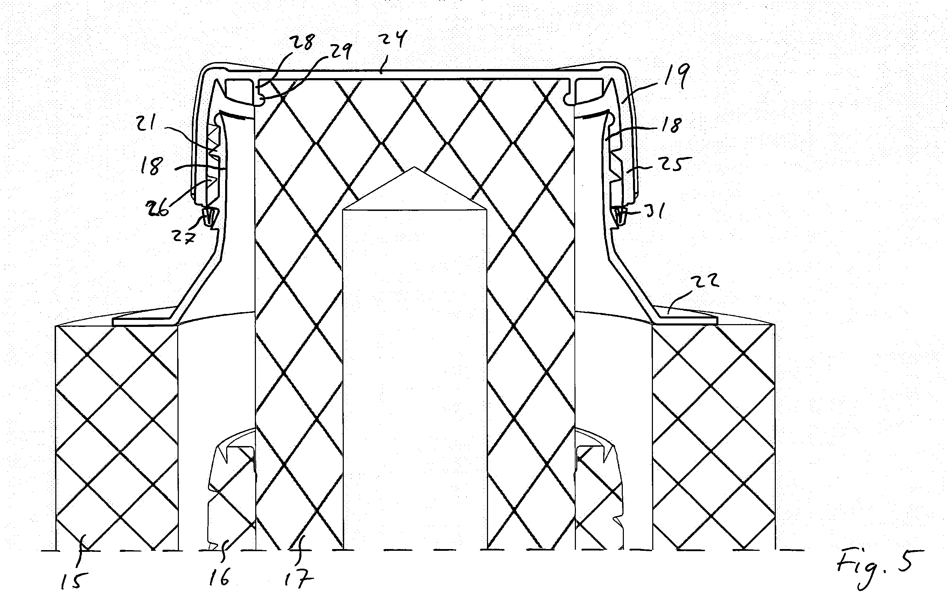

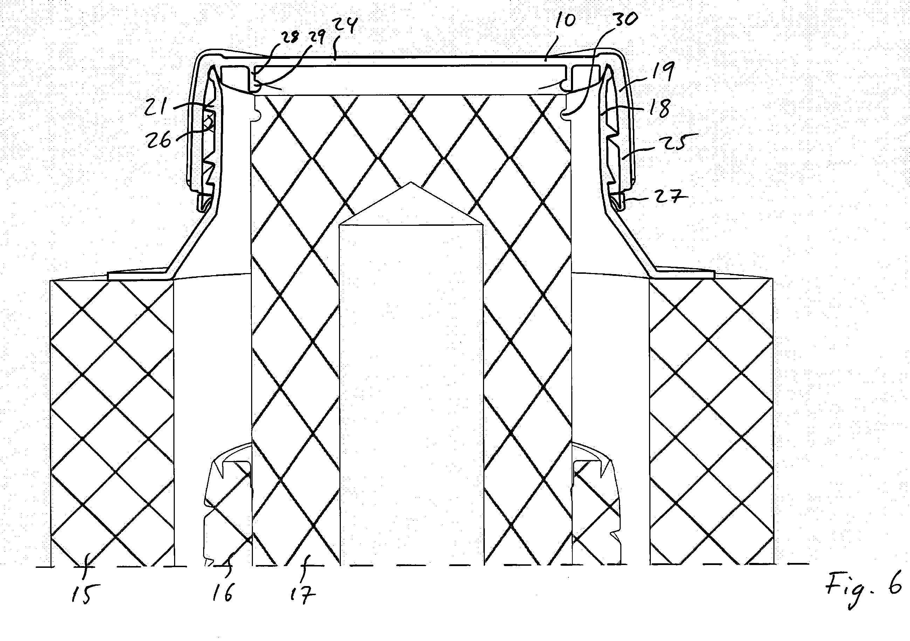

After the neck 18 has been disengaged from the outer tool core 16 the neck 18 and the cap 19 are displaced in relation to each other in the axial direction. For example, the neck 18 is displaced into the tubular portion 25 of the cap 19, as illustrated in Fig. 5, while the cap is kept in position by means of the projection 28. For example, the ejector 15 is displaced in relation to the inner tool core 17 while bringing the neck 18 along therewith and breaking along the notch 23. Hence, the notch 23 connecting the cap 19 and the neck 18 is broken to form the cap 19 as a first piece and the neck as a second piece, wherein the first piece is not integrated with the second piece. For example, the folding portion 31 is folded inwards during displacement of the neck 18 in relation to the inner tool core 17, wherein further displacement results in that the notch 23 is broken and further displacement results in that the neck 18 is brought into the cap 19 to be partially enclosed by the tubular portion 25 of the cap 19. In the illustrated embodiment the neck 18 is pushed into the cap 19, so that the thread 21 of the neck 18 is pushed over the thread 26 of the cap 19, wherein the cap 19 is mounted on the neck 18 by axial displacement without any screwing. For example, the neck 18 is displaced into the cap 19 to a final position, as illustrated in Fig. 6, after which further displacement results in that also the cap 19 is displaced in the same direction, for example by a portion, such as an end portion of the neck 18, engages a suitable portion of the cap 19, so that a force transferred from the neck 18 to the cap 19 exceeds the force with which the projection 28 holds the cap 19 to the inner tool core 17, whereby the package closure 10 is finished and disengaged from both the outer tool core 16 and the inner tool core 17. Hence, Figs. 3-6 illustrate schematically an ejection process in which a moulded package closure 10 is ejected from the device while being finished by applying the cap 19 onto the neck 18. After moulding the package closure 10, when the material in the package closure 10 still is soft and not yet entirely has solidified or crystallized, both the ejector 15 and the inner tool core 17, for example, is brought axially forward while bringing along the package closure 10 in the same direction, so that the cap 19 and the neck 18 is disengaged from the outer tool core 16. Hence, the inner tool core 17 and the ejector 15 are displaceable in the axial direction in relation to the outer tool core 16. Alternatively, the outer tool core 16 is pulled backwards in relation to the ejector 15, the inner tool core 17 and the package closure 10. Then, the ejector 15 is displaced axially forward in relation to the inner tool core 17 while the inner tool core 17 interacts with the projection 28 to retain the cap 19 in position, so that the neck 18, by means of the ejector 15, is displaced in relation to the cap 19 while folding along the notch 23 and breaking thereof. Hence, the ejector 15 is displaceable in the axial direction in relation also to the inner tool core 17. To temporarily retain the cap 19 the recess 30 engages the projection 28 or the radially inwards extending flange 29 of the projection 28. Hence, the projection 28 is more rigid than the notch 23, wherein the notch 23 is folded and/or broken when the ejector 15 is displaced axially while the projection 28 not bends. After that the ejector 15 is brought further forward in the axial direction while bringing along therewith the package closure 10 in the same direction, so that the projection 28, by its inherent flexibility, is disengaged from the inner tool core 17 and can leave the device for production of the package closure 10. For example, after that the projection 28 returns to its original position by its flexibility.

The application of the cap 19 on the neck 18 and the ejection of the package closure 10 is, for example, performed within one or a few seconds after the moulding thereof, wherein the temperature of the material in the package closure 10 is above room temperature and, for example, above 40°C or about 60°C, so that the material is semi liquid during the ejection.

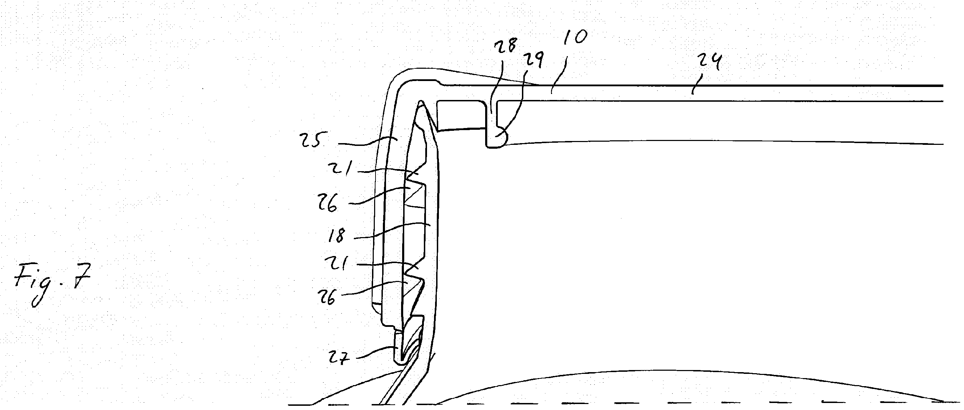

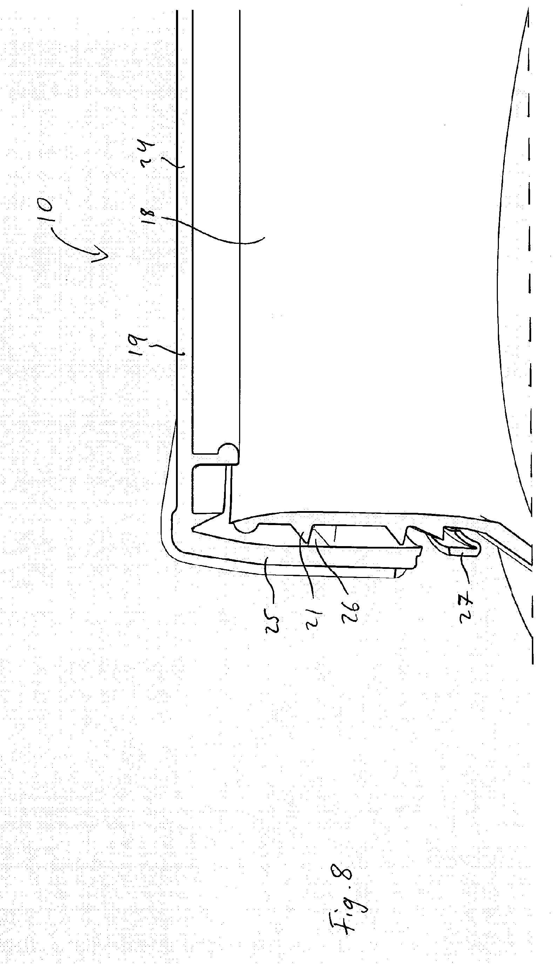

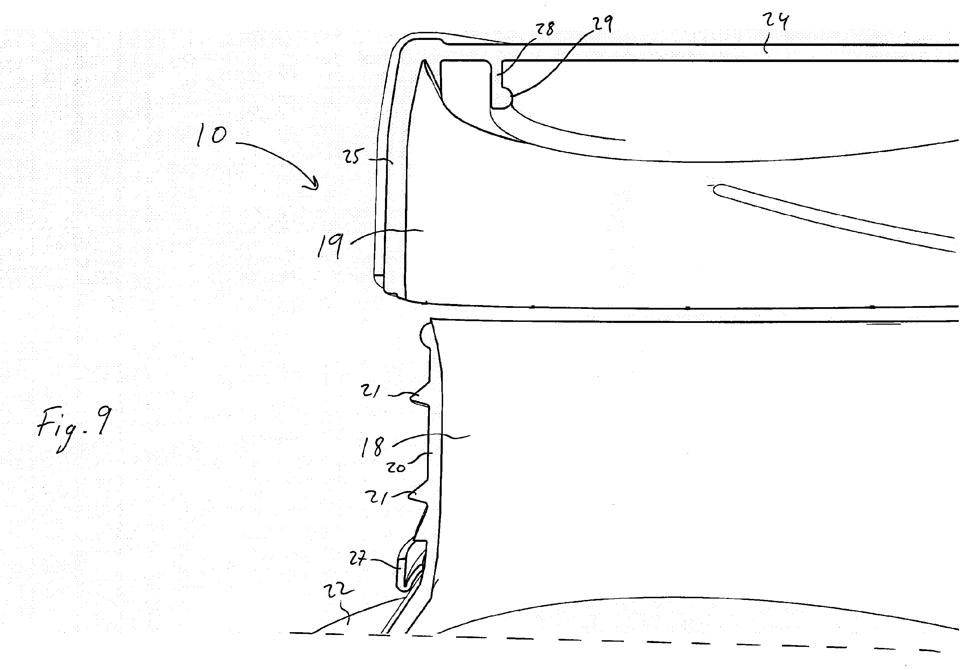

With reference to Fig. 7 a part of the package closure 10 is illustrated in its closed and intact position, wherein the thread 26 of the cap 19 interacts with the thread 21 of the neck 18 and the optional tamper-evident ring 27 is intact and not broken. To open the package closure 10 the cap 19 is screwed, i.e. turned or rotated, around the centre axis in a conventional manner, so that the tamper-evident ring 17 breaks and the cap 19, by the threads 21, 26, is forced in the axial direction, usually upwards, from the neck 18, as illustrated in Fig. 8, until the cap 19 is disengaged from the neck 18, as illustrated in Fig. 9. After that the package closure 10 can be resealed in a conventional way by screwing the cap 19 onto the neck 18 again, wherein the tamper-evident ring 27 remains broken.

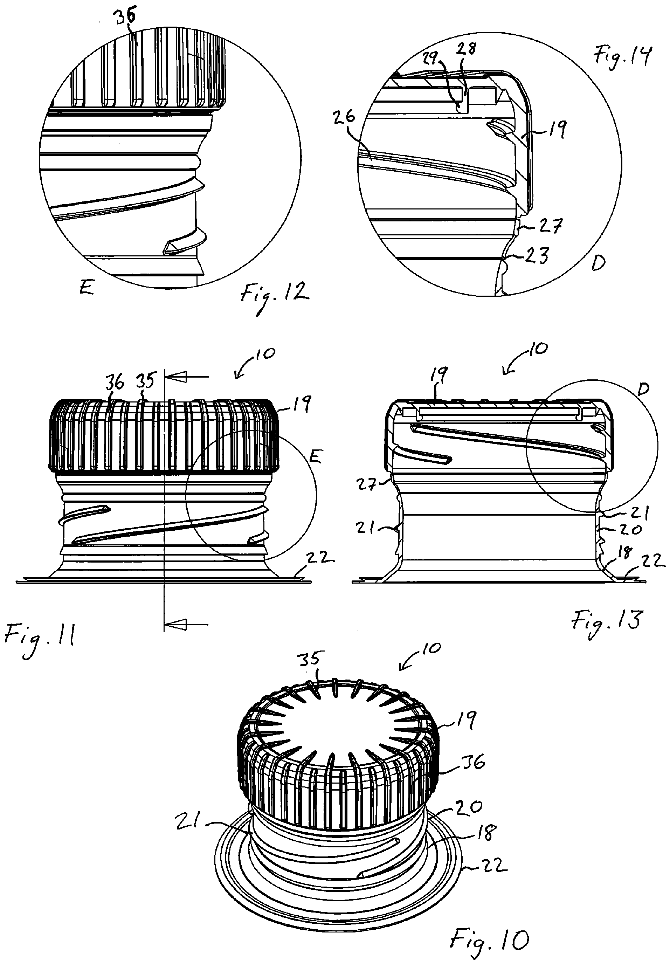

Figs. 10-14 show a package closure 10 and different details thereof according to one embodiment in which the package closure 10 is under production and the neck 18 not has been displaced into the cap 19. In the illustrated embodiment the cap 19 is arranged as a screw cap having the top portion 24, the tubular portion 25 and the thread 26. The neck 18 is arranged with the tubular first portion 20, the thread 21 and the second portion 22.

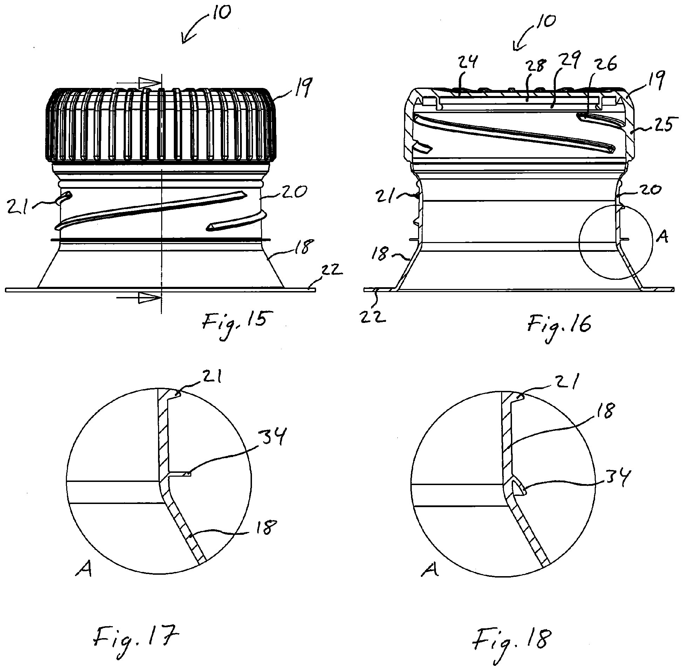

Figs. 15-18 show a package closure and different details thereof according to one alternative embodiment. Figs. 17 and 18 show more in detail an alternative locking portion 34, wherein Fig. 17 shows the locking portion 34 in a position before the cap 19 has been brought onto the neck 18 and Fig. 18 show the locking portion 34 in a position after the cap 19 has been brought onto the neck 18.

In the illustrated embodiment the top portion 24 of the cap 19 is arranged with radially extending stiffening ribs 35 for reinforcement in the radial direction. For example, the stiffening ribs 35 coincide with ridges 36 on an exterior side of the tubular portion 25 of the cap. For example, the stiffening ribs 35 extend at least 1-3 mm in the radial direction from a circumference of the top portion 24, such as 2-5 mm or 3-4 mm. For example, the stiffening ribs 35 extend along at least 20% of a radius of the top portion, such as 20-50%.

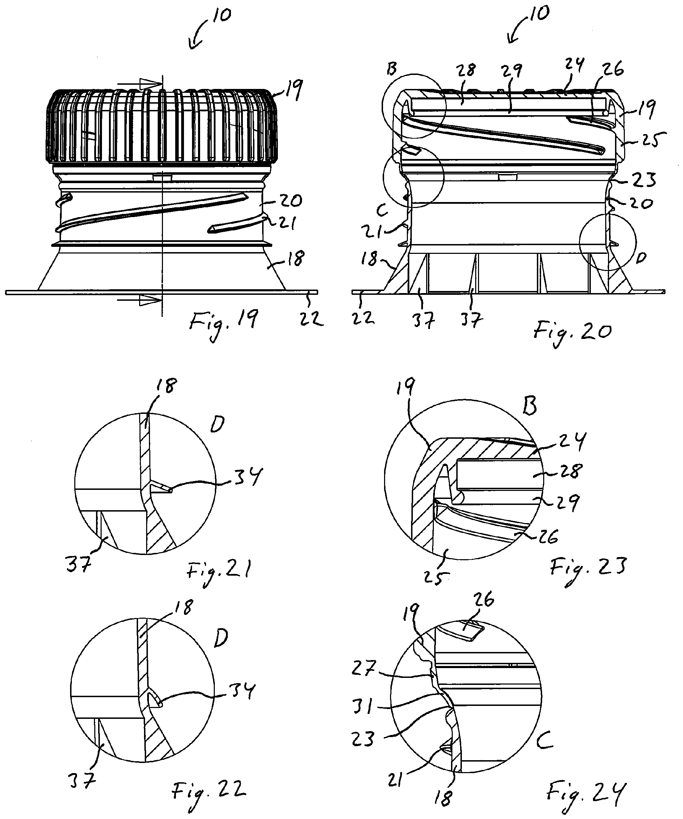

With reference to Figs. 19-24 a package closure 10 and different details thereof is illustrated according to another embodiment in which the package closure 10 is under production and the neck 18 has not been displaced into the cap 19. In the embodiment of Figs. 19-24 the projection 28 is arranged for interaction with an end of the neck 18 when the package closure 10 is entirely closed, so that the end of the neck 18 then is arranged between the tubular portion 25 of the cap 19 and the projection 28. The projection 28 is formed with the radially extending flange 29, wherein the flange 29 extends radially inwards and, for example, extends substantially in parallel with the top portion 24. Hence, a more rigid cap 19 is obtained with improved deformation resistance, for example, when the flange 29 interacts with the recess 30 of the inner tool core 17 during the relative displacement of the neck 18 and the cap 19 during production of the package closure 10. Simultaneously, material savings are obtained.

In the embodiment of Figs. 19-24 the neck 18 is provided with supporting elements 37 to reinforce the neck 18 and prevent the neck 18 from folding when the cap 19 is brought onto the neck 18 while folding the folding portion 31. The supporting elements 37 extend axially, for example along a part of the interior side of the neck 18 in the lower portion of the neck 18, such as in connection with the radially extending second portion 22 of the neck 18. For example, a plurality of supporting elements 37 is distributed around the interior side of the neck 18. In the illustrated embodiment the supporting elements 37 are triangular having their apexes directed towards the top of the neck 18.

As is evident from the illustrated embodiments the folding portion 31 is inclined radially outwards in a direction towards the cap 19 during production of the package closure 10 and the neck 18 has not been displaced into the cap 19. For example, an angle between the centre axis X and the folding portion 31 is relatively large, such as at least 30 degrees, to ensure that the folding portion 31 is folded outwards and downwards when the cap 19 is brought onto the neck 18 or the neck 18 is brought into the cap 19. Alternatively, the folding portion 31 is bent outwards in the radial direction in a corresponding manner.

## Claims

1. A method for producing a package closure (10) having a neck (18) and a cap (19), comprising the steps of
a) by means of movable jaws (11, 12) and an outer tool core (16) forming the neck (18) and the cap (19) in one single integrated piece, wherein the neck (18) is connected to the cap (19) through a notch (23), and forming a thread (26) on the cap (19) and a thread (21) on the neck (18),
b) by means of an inner tool core (17) forming a flexible projection (28) on an inner side of the cap (19) for interaction with the inner tool core (17),
c) removing the jaws (11, 12) from the formed package closure (10),
d) displacing the outer tool core (16) in relation to the package closure (10) and the inner tool core (17) to at least partially disengage the package closure (10) from the outer tool core (16),
e) by means of the inner tool core (17) retaining the cap (19) by the projection (28) formed on the interior side of the cap (19) and simultaneously, by means of an ejector (15), displacing the neck (18) axially in relation to the cap (19) and thereby breaking the notch (23) and bringing the thread (26) of the cap (19) into engagement with the thread (21) of the neck (18) through an inherent flexibility of the threads (26, 21) to form a package closure having a cap (19) mounted on the neck (18),
f) by means of the ejector (15) displacing the package closure (10) in relation to the inner tool core (17), so that the projection (28) by its flexibility is disengaged from the inner tool core (17).

2. A method according to claim 1, comprising the step of forming, in step a, a tamper-evident ring (27) between the cap (19) and the notch (23) by means of the jaws (11, 12) and the outer tool core (16).

3. A method according to any of the preceding claims, comprising the step of displacing, in step e, the neck (18) into the cap (19).

4. A method according to any of the preceding claims, comprising the step of forming, in step b, the projection (28) projecting in the axial direction from a top portion (24) of the cap (19) and with a radially projecting flange (29) for interaction with a corresponding recess (30) in the inner tool core (17).

5. A method according to any of the preceding claims, comprising performing step a and step b simultaneously and then the steps c-f in the mentioned order.

6. A package closure (10) comprising a neck (18) provided with an opening and a cap (19) for closing the opening, wherein the cap (19) comprises a top portion (24) extending across the opening and extending radially in relation to a centre axis (X) of the package closure (10), and a tubular portion (25) extending axially and being provided with a thread (26), ***characterised* in that** an interior side of the top portion (24) of the cap (19) is provided with a flexible and axially projecting projection (28) having a radially projecting flange (29) for retaining the cap (19) to an inner tool core (17) of a device for producing the package closure (10) during axial relative displacement between the cap (19) and the neck (18) to push the thread (26) of the cap (19) over a thread (21) of the neck (18) during production of the package closure (10).

7. A package closure according to claim 6, wherein the thread (26) of the cap (19) is an inner thread, and wherein the neck (18) is arranged with an outer thread (21) for interaction with the thread (26) of the cap (19).

8. A package closure according to claim 6 or 7, wherein the tubular portion (25) of the cap (19) is provided with a tamper-evident ring (27).

9. A package closure according to any of claims 6-8, wherein the projection (28) with the flange (29) is more rigid than a folding portion (31) of the package closure.

10. A device for producing a package closure (10) having a centre axis (X), a neck (18) and a cap (19), comprising a movable first jaw (11), a movable second jaw (12) and a tool core (14) interacting with the jaws (11, 12) to form a mould for the package closure (10), and an ejector (15) for ejecting the produced package closure (10), wherein the tool core (14) comprises an outer tool core (16) and an inner tool core (17) being movable in relation to the outer tool core (16), wherein the tool core (14) and the jaws (11, 12) are arranged for forming the neck (18) and the cap (19) in one single integrated piece and for forming the cap (19) with a radially extending top portion (24),
***characterised* in**
**that** the outer tool core (16) and the jaws (11, 12) are arranged for forming a thread (26) of the cap (19) and a thread (21) of the neck (18),
**that** the outer tool core (16) is arranged for forming, together with the jaws (11, 12), a notch (23) between the neck (18) and the cap (19), and
**that** the inner tool core (17) comprises a recess (30) for forming and interaction with a projection (28) on the interior side of the top portion (24) of the cap (19) for retaining the cap (19) to the inner tool core (17) during axial relative displacement between the ejector (15) and the inner tool core (17) to push the thread (26) of the cap (19) over the thread (21) of the neck (18).

11. A device according to claim 10, wherein the outer tool core (16) is arranged with an end portion (32) for forming the cap (19), and a portion (33) for forming the neck (18) or at least a portion thereof, wherein the end portion (32) is arranged with larger diameter than the portion (33) for forming the neck (18).

12. A device according to claim 11, wherein the end portion (32) of the outer tool core (16) is displaceable to a position beyond the neck (18) or a portion of the neck for receiving the cap.

13. A device according to any of claims 10-12, wherein the outer tool core (16) is arranged for forming, together with the jaws (11, 12) an interior thread (26) of the cap (19) and an exterior thread (21) of the neck (18).

14. A device according to any of claims 10-13, wherein the inner tool core (17) is arranged for forming the projection (28) stronger than the notch (23), so that the neck (18) by means of the ejector (15) is displaceable in relation to the cap (19) while breaking the notch (23) when the cap (19) is connected to the inner tool core (17) through the projection (28)

## Patentansprüche

1. Verfahren zur Herstellung eines Verpackungsverschlusses (10) mit einem Stutzen (18) und einer Abdeckung (19), mit den Schritten
a) mittels beweglicher Backen (11, 12) und einem Außenwerkzeugkern (16), Formen des Stutzens (18) und der Abdeckung (19) zu einem einzigen integrierten Element, wobei der Stutzen (18) über eine Einkerbung (23) mit der Abdeckung (19) verbunden ist, und Formen eines Gewindes (26) auf der Abdeckung (19) und eines Gewindes (21) auf dem Stutzen (18),
b) mittels eines Innenwerkzeugkerns (17), Bilden eines elastischen Vorsprungs (28) auf einer Innenseite der Abdeckung (19) zur Interaktion mit dem Innenwerkzeugkern (17),
c) Entfernen der Backen (11, 12) von dem geformten Verpackungsverschluss (10),
d) Verschieben des Außenwerkzeugkerns (16) in Bezug auf den Verpackungsverschluss (10) und den Innenwerkzeugkern (17), so dass der Verpackungsverschluss (10) zumindest teilweise von dem Außenwerkzeugkern (16) entkoppelt wird,
e) mittels des Innenwerkzeugkerns (17), Halten der Abdeckung (19) durch den Vorsprung (28), der auf der Innenseite der Abdeckung (19) ausgebildet ist, und gleichzeitig mittels einer Auswurfeinheit (15), Verschieben des Stutzens (18) axial in Bezug auf die Abdeckung (19), und dadurch Brechen der Einkerbung (23) und in Eingriff bringen des Gewindes (26) der Abdeckung (19) mit dem Gewinde (21) des Stutzens (18) durch inhärente Elastizität der Gewinde (26, 21) derart, dass ein Verpackungsverschluss mit einer Abdeckung (19) gebildet wird, die auf dem Stutzen (18) befestigt ist,
f) mittels der Auswurfeinheit (15), Verschieben des Verpackungsverschlusses (10) in Bezug auf den Innenwerkzeugkern (17) derart, dass der Vorsprung (28) durch seine Elastizität von dem Innenwerkzeugkern (17) entkoppelt wird.

2. Verfahren nach Anspruch 1, das den Schritt umfasst: Bilden, im Schritt a, eines Manipulationssichtbarmachungsrings (27) zwischen der Abdeckung (19) und der Einkerbung (23) durch die Backen (11, 12) und den Außenwerkzeugkern (16).

3. Verfahren nach einem der vorhergehenden Ansprüche, mit dem Schritt: Verschieben, im Schritt e, des Stutzens (18) in die Abdeckung (19).

4. Verfahren nach einem der vorhergehenden Ansprüche, mit dem Schritt: Bilden, im Schritt b, des Vorsprungs (28), der in axialer Richtung aus einem oberen Bereich (24) der Abdeckung (19) hervorsteht und einen radial hervorstehenden Flansch (29) zum Interagieren mit einer entsprechenden Vertiefung (30) in dem Innenwerkzeugkern (17) aufweist.

5. Verfahren nach einem der vorhergehenden Ansprüche, das umfasst: Ausführen von Schritt a und Schritt b gleichzeitig, und anschließend, Ausführen der Schritte c-f in der genannten Reihenfolge.

6. Verpackungsverschluss (10) mit einem Stutzen (18), der mit einer Öffnung versehen ist, und mit einer Abdeckung (19) zum Verschließen der Öffnung, wobei die Abdeckung (19) einen oberen Bereich (24), der über die Öffnung hinweg verläuft und sich radial in Bezug auf eine Mittelachse (X) des Verpackungsverschlusses (10) erstreckt, und einen rohrförmigen Bereich (25) aufweist, der sich axial erstreckt, und mit einem Gewinde (26) versehen ist,
**dadurch gekennzeichnet, dass**
eine Innenseite des oberen Bereichs (24) der Abdeckung (19) mit einem elastischen und axial hervorstehenden Vorsprung(28) mit einem radial hervorstehenden Flansch (29) versehen ist, der ausgebildet ist, die Abdeckung (19) an einem Innenwerkzeugkern (17) einer Einrichtung zum Herstellen des Verpackungsverschlusses (10) während der axialen relativen Verschiebung zwischen der Abdeckung (19) und dem Stutzen (18) zu halten und während der Herstellung des Verpackungsverschlusses (10) das Gewinde (26) der Abdeckung (19) über ein Gewinde (21) des Stutzens (18) zu schieben.

7. Verpackungsverschluss nach Anspruch 6, wobei das Gewinde (26) der Abdeckung (19) ein Innengewinde ist, und wobei der Stutzen (18) mit einem Außengewinde (21) versehen ist, das mit dem Gewinde (26) der Abdeckung (19) im Eingriff ist.

8. Verpackungsverschluss nach Anspruch 6 oder 7, wobei der rohrförmige Bereich (25) der Abdeckung (19) mit einem Manipulationssichtbarmachungsring (27) versehen ist.

9. Verpackungsverschluss nach einem der Ansprüche 6-8, wobei der Vorsprung (28) mit dem Flansch (29) eine höhere Steifigkeit hat als ein Faltbereich (31) des Verpackungsverschlusses.

10. Einrichtung zum Herstellen eines Verpackungsverschlusses (10) mit einer Mittelachse (X), einem Stutzen (18) und einer Abdeckung (19), wobei die Einrichtung aufweist: eine bewegliche erste Backe (11), eine bewegliche zweite Backe (12) und einen Werkzeugkern (14), der mit den Backen (11, 12) so interagiert, dass eine Form für den Verpackungsverschluss (10) gebildet wird, und eine Auswurfeinheit (15) zum Auswerfen des hergestellten Verpackungsverschlusses (10), wobei der Werkzeugkern (14) einen Außenwerkzeugkern (16) und einen Innenwerkzeugkern (17), der im Bezug auf den Außenwerkzeugkern (16) bewegbar ist, aufweist, wobei der Werkzeugkern (14) und die Backen (11, 12) ausgebildet sind, den Stutzen (18) und die Abdeckung (19) in ein einziges integriertes Element zu formen und die Abdeckung (19) mit einem radial verlaufenden vorderen Bereich (24) zu formen,
**dadurch gekennzeichnet,**
**dass** der Außenwerkzeugkern (16) und die Backen (11, 12) zur Erzeugung eines Gewindes (26) der Abdeckung (19) und eines Gewindes (21) des Stutzens (18) ausgebildet sind,
**dass** der Außenwerkzeugkern (16) zusammen mit den Backen (11, 12) zur Herstellung einer Einkerbung (23) zwischen dem Stutzen (18) und der Abdeckung (19) ausgebildet ist, und
**dass** der Innenwerkzeugkern (17) eine Vertiefung (30) zur Formung eines Vorsprungs (28) und zur Interaktion mit diesem auf der Innenseite des vorderen Bereichs (24) der Abdeckung (19) zum Halten der Abdeckung (19) an dem Innenwerkzeugkern (17) während einer axialen relativen Verschiebung zwischen der Auswurfeinheit (15) und dem Innenwerkzeugkern (17) aufweist, um das Gewinde (26) der Abdeckung (19) über das Gewinde (21) des Stutzens (18) zu schieben.

11. Einrichtung nach Anspruch 10, wobei der Außenwerkzeugkern (16) mit einem Endbereich (32) zur Formung der Abdeckung (19) und einem Bereich (33) zur Formung des Stutzens (18) oder zumindest eines Teils davon versehen ist, wobei der Endbereich (32) einen größeren Durchmesser als der Bereich (33) zur Formung des Stutzens (18) hat.

12. Einrichtung nach Anspruch 11, wobei der Endbereich (32) des Außenwerkzeugkerns (16) zu einer Position über den Stutzen (18) hinaus oder zu einem Bereich des Stutzens zur Aufnahme der Abdeckung verschiebbar ist.

13. Einrichtung nach einem der Ansprüche 10-12, wobei der Außenwerkzeugkern (16) zusammen mit den Backen (11, 12) zur Formung eines Innengewindes (26) der Abdeckung (19) und eines Außengewindes (21) des Stutzens (18) ausgebildet ist.

14. Einrichtung nach einem der Ansprüche 10-13, wobei der Innenwerkzeugkern (17) ausgebildet ist, den Vorsprung (28) fester zu bilden als die Einkerbung (23), derart, dass der Stutzen (18) durch die Auswurfeinheit (15) in Bezug auf die Abdeckung (19) verschiebbar ist, wobei die Einkerbung (23) bricht, wenn die Abdeckung (19) mit dem Innenwerkzeugkern (17) über den Vorsprung (28) verbunden wird.

## Revendications

1. Procédé de production d'une fermeture d'emballage (10) comportant un goulot (18) et un capuchon (19), comprenant les étapes consistant à
a) au moyen de mâchoires mobiles (11, 12) et d'une âme d'outil externe (16), former le goulot (18) et le capuchon (19) en une seule pièce intégrée, dans lequel le goulot (18) est relié au capuchon (19) à travers une encoche (23), et former un filetage (26) sur le capuchon (19) et un filetage (21) sur le goulot (18),
b) au moyen d'une âme d'outil interne (17), former une saillie flexible (28) sur un côté interne du capuchon (19) pour une interaction avec l'âme d'outil interne (17),
c) retirer les mâchoires (11, 12) de la fermeture d'emballage formée (10),
d) déplacer l'âme d'outil externe (16) par rapport à la fermeture d'emballage (10) et l'âme d'outil interne (17) pour libérer au moins partiellement la fermeture d'emballage (10) de l'âme d'outil externe (16),
e) au moyen de l'âme d'outil interne (17), retenir le capuchon (19) par la saillie (28) formée sur le côté intérieur du capuchon (19) et simultanément, au moyen d'un éjecteur (15), déplacer le goulot (18) axialement par rapport au capuchon (19) et rompre ainsi l'encoche (23) et mettre en prise le filetage (26) du capuchon (19) avec le filetage (21) du goulot (18) par l'intermédiaire d'une flexibilité inhérentes des filetages (26, 21) pour former une fermeture d'emballage ayant un capuchon (19) monté sur le goulot (18),
f) au moyen de l'éjecteur (15), déplacer la fermeture d'emballage (10) par rapport à l'âme d'outil interne (17), de sorte que la saillie (28) soit libérée par sa flexibilité de l'âme d'outil interne (17).

2. Procédé selon la revendication 1, comprenant l'étape consistant à former, à l'étape a, un anneau d'inviolabilité (27) entre le capuchon (19) et l'encoche (23) au moyen des mâchoires (11, 12) et de l'âme d'outil externe (16).

3. Procédé selon l'une quelconque des revendications précédentes, comprenant l'étape consistant à déplacer, à l'étape e, le goulot (18) dans le capuchon (19).

4. Procédé selon l'une quelconque des revendications précédentes, comprenant l'étape consistant à former, à l'étape b, la saillie (28) faisant saillie dans la direction axiale à partir d'une partie supérieure (24) du capuchon (19) et avec un rebord faisant saillie radialement 29) pour une interaction avec un évidement correspondant (30) dans l'âme d'outil interne (17).

5. Procédé selon l'une quelconque des revendications précédentes, comprenant la réalisation de l'étape a et de l'étape b simultanément, et ensuite des étapes c à f dans l'ordre mentionné.

6. Fermeture d'emballage (10) comprenant un goulot (18) muni d'une ouverture et un capuchon (19) pour fermer l'ouverture, le capuchon (19) comprenant une partie supérieure (24) s'étendant à travers l'ouverture et s'étendant radialement par rapport à un axe central (X) de la fermeture d'emballage (10), et une partie tubulaire (25) s'étendant axialement et munie d'un filetage (26), **caractérisée en ce qu'**un côté intérieur de la partie supérieure (24) du le capuchon (19) est muni d'une saillie flexible et faisant saillie axialement (28) ayant un rebord faisant saillie radialement (29) pour retenir le capuchon (19) sur l'âme d'outil interne (17) d'un dispositif pour produire la fermeture d'emballage (10) lors d'un déplacement relatif axial entre le capuchon (19) et le goulot (18), pour pousser le filetage (26) du capuchon (19) sur un filetage (21) du goulot (18) lors de la production de la fermeture d'emballage (10).

7. Fermeture d'emballage selon la revendication 6, dans laquelle le filetage (26) du capuchon (19) est un filetage interne, et dans lequel le goulot (18) est conçu avec un filetage externe (21) pour une interaction avec le filetage (26) du capuchon (19).

8. Fermeture d'emballage selon la revendication 6 ou 7, dans laquelle la partie tubulaire (25) du capuchon (19) est munie d'un anneau d'inviolabilité (27).

9. Fermeture d'emballage selon l'une quelconque des revendications 6 à 8, dans laquelle la saillie (28) avec le rebord (29) est plus rigide qu'une partie de pliage (31) de la fermeture d'emballage.

10. Dispositif de production d'une fermeture d'emballage (10) ayant un axe central (X), un goulot (18) et un capuchon (19), comprenant une première mâchoire mobile (11), une seconde mâchoire mobile (12) et une âme d'outil (14) interagissant avec les mâchoires (11, 12) pour former un moule pour la fermeture d'emballage (10), et un éjecteur (15) pour éjecter la fermeture d'emballage produite (10), l'âme d'outil (14) comprenant une âme d'outil externe (16) et un âme d'outil interne (17) pouvant se déplacer par rapport à l'âme d'outil externe (16), l'âme d'outil (14) et les mâchoires (11, 12) étant conçus pour former le goulot (18) et le capuchon (19) en une seule pièce intégrée et pour former le capuchon (19) avec une partie supérieure (24) s'étendant radialement, **caractérisé**
**en ce que** l'âme d'outil externe (16) et les mâchoires (11, 12) sont agencés pour former un filetage (26) du capuchon (19) et un filetage (21) du goulot (18),
**en ce que** l'âme d'outil externe (16) est agencée pour former, ensemble avec les mâchoires (11, 12), une encoche (23) entre le goulot (18) et le capuchon (19), et
**en ce que** l'âme d'outil interne (17) comprend un évidement (30) destiné à former et interagir avec une saillie (28) située sur le côté intérieur de la partie supérieure (24) du capuchon (19) pour retenir le capuchon (19) dans l'âme d'outil interne (17) pendant un déplacement relatif axial entre l'éjecteur (15) et l'âme d'outil interne (17) pour pousser le filetage (26) du capuchon (19) sur le filetage (21) du goulot (18).

11. Dispositif selon la revendication 10, dans lequel l'âme d'outil externe (16) est conçue avec une partie d'extrémité (32) pour former le capuchon (19), et une partie (33) pour former le goulot (18) ou au moins une partie de celui-ci, dans lequel la partie d'extrémité (32) est conçue avec un diamètre plus grand que la partie (33) pour former le goulot (18).

12. Dispositif selon la revendication 11, dans lequel la partie d'extrémité (32) de l'âme d'outil externe (16) peut être déplacée dans une position au-delà du goulot (18) ou d'une partie du goulot pour recevoir le capuchon.

13. Dispositif selon l'une quelconque des revendications 10 à 12, dans lequel l'âme d'outil externe (16) est conçue pour former, ensemble avec les mâchoires (11, 12) un filetage intérieur (26) du capuchon (19) et un filetage extérieur (21) du goulot (18).

14. Dispositif selon l'une quelconque des revendications 10 à 13, dans lequel l'âme d'outil interne(17) est conçue pour former la saillie (28) de manière plus forte que l'encoche (23), de sorte que le goulot (18) au moyen de l'éjecteur (15) peut être déplacé par rapport au capuchon (19) tout en cassant l'encoche (23) lorsque le capuchon (19) est relié à l'âme d'outil interne (17) via la saillie(28).
